# EUROPÄISCHE PATENTSCHRIFT

(11) **EP 0 702 144 B1**
(45) Veröffentlichungstag und Bekanntmachung des Hinweises auf die Patenterteilung: **29.12.1997**
(21) Anmeldenummer: 95112575.6
(22) Anmeldetag: 10.08.1995
(51) Int. Cl.: F02M 37/22, B01D 35/30

(54) **Wechselfilterelement zum Reinigen von Kraftstoff und Filtergehäuse zum Einbau des Wechselfilterelements**
Replaceable filter element for cleaning fuel and filter casing for the installation of the replaceable filter element
Elément de filtrage interchangeable et boîtier filtrant pour le montage de l'élément de filtrage interchangeable

(30) Priorität: 13.09.1994 DE 4432529
(43) Veröffentlichungstag der Anmeldung: 20.03.1996
(73) Patentinhaber: ROBERT BOSCH GMBH, 70442 Stuttgart (DE)
(72) Erfinder: Projahn, Ulrich, Dr. Dipl.-Ing., E-28109 El Soto, Madrid (ES); Lucas, Bernhard, Dipl.-Ing., E-28034 Madrid (ES); Granda-Trigo, Miguel, Dipl.-Ing., 1 dcha., E-28037 Madrid (ES)

(56) Entgegenhaltungen:
- EP-A- 0 470 440
- DE-A- 4 231 999

## Beschreibung

### Stand der Technik

Die Erfindung geht aus von einem Wechselfilterelement zum Reinigen von Kraftstoff und einem Filtergehäuse zum Einbau dieses Wechselfilterelements nach der im Oberbegriff des Anspruchs 1 näher angegebenen Gattung.

Ein solches Wechselfilterelement für Dieselkraftstoff ist bereits aus der DE 4 231 999 A1 bekannt, bei dem das zugehörige Filtergehäuse einen Filterkopf aufweist, an dem wahlweise ein Gehäusefilter mit austauschbarem Wechselfilterelement oder eine wegwerfbare Wechselbox mit nicht austauschbarem Filterelement anbaubar sind. Zu diesem Zweck sind an dem Filterkopf drei konzentrisch zueinander liegende Dichtstellen angeordnet, von denen stets nur zwei gleichzeitig miteinander benutzt werden. Bei Verwendung einer Wechselbox werden die beiden innenliegenden Dichtstellen benutzt, wobei zu deren Befestigung am Filterkopf eine Überwurfmutter einen Bördelrand der Wechselbox hintergreift und beim Festschrauben gegen den Filterkopf preßt. Bei einem Gehäusefilter mit austauschbarem Wechselfilterelement werden die innere und äußere Dichtstelle verwendet, wobei ein umgebogener Kragen eines becherförmigen Gehäuseteils von der Überwurfmutter axial gegen einen Flachdichtring gepreßt wird. Zur besseren Handhabung und Abdichtung hat das Wechselfilterelement an seiner Mantelfläche ein Papprohr, das sich ebenfalls am Flachdichtring abstützt. Obwohl diese Filterbauart universell einsetzbar ist, hat dieses Wechselfilterelement doch den Nachteil, daß hier zur Abdichtung axiale Vorspannungen erforderlich sind, die insbesondere unter Temperatur- und Schwingungsbelastung nachlassen können. Obwohl das Papprohr an der Mantelfläche des Wickels dem Wechselfilterelement eine stabile Form verleiht, erfordert diese Bauweise einen relativ großen Materialaufwand und relativ genaue Außendurchmesser für einen Austausch des Wechselfilterelements im Stahlblechgehäuse. Zudem ist das Schraubgewinde in der Überwurfmutter wenig servicefreundlich und kann auch zu schrägen Einspannungen des becherförmigen Gehäuseteils führen, wodurch die Dichtfunktion störend beeinflußt wird. Für manche Anwendungsfälle ist ferner ungünstig, daß die Anschlüsse für Zulauf und Ablauf im Filter unmittelbar in dem metallischen Halteflansch ausgebildet sind.

Ferner ist aus der EP 0 470 440 A1 ein Wechselfilterelement zum Reinigen von Kraftstoff mit einem Filtergehäuse bekannt, bei dem das becherförmige Gehäuseteil und der zugehörige Filterkopf über eine Schnellwechselverbindung lösbar miteinander verbunden sind. Für die Schnellwechselverbindung sind im Filterkopf längs des Umfangs gleichmäßig verteilt acht spiralförmig verlaufende Rampen angeordnet, während im Gehäuseteil zugehörige Nuten angeordnet sind, so daß die Schnellwechselverbindung nach Art eines mehrgängigen, steilen Trapezgewindes arbeitet. Hier werden für den Filterkopf zwei unterschiedliche Varianten verwendet, welche einen Flanschanschluß oder einen Leitungsanschluß für Zu- und Ablauf ermöglichen sollen. Obwohl hier durch die Schnellwechselverbindung der im becherförmigen Gehäuseteil angeordnete, axial durchströmte Wickel als Wechselfilterelement verwendbar ist, gestaltet sich dessen Handhabung, Montage und Abdichtung relativ schwierig. Insbesondere ist eine Abdichtung zwischen der Schmutz- und der Reinseite an dem Außenumfang des Wickels hier nicht näher dargestellt. Der Wickel selbst weist zu seiner mechanischen Stabilisierung lediglich ein Mittelrohr auf, so daß er außen relativ weich und leicht beschädigbar ist und dementsprechend vorsichtig gehandhabt werden muß.

### Vorteile der Erfindung

Das erfindungsgemäße Wechselfilterelement zum Reinigen von Kraftstoff mit den kennzeichnenden Merkmalen des Hauptanspruchs hat demgegenüber den Vorteil, daß es eine einfach handhabbare und kostengünstige Einstecklösung des Wechselfilterelements ermöglicht, das sich zum Einbau in universell verwendbare Filtergehäuse eignet. So ist das Wechselfilterelement in Zusammenhang mit einem becherförmigen Gehäuseteil als Gehäusefilter einsetzbar, wobei dessen Filterkopf sich auch zum Anbau einer wegwerfbaren Wechselbox eignet. Das Wechselfilterelement ermöglicht somit Filterkonstruktionen, bei denen zumindest wesentliche Teile für unterschiedliche Einsatzfälle verwendbar sind. Dabei ermöglicht das Wechselfilterelement eine umweltfreundliche, bezüglich verwendeter Materialien sortenarme Bauweise ohne jegliche Metallteile, was sich auch kostengünstig auswirkt. Das Wechselfilterelement kommt mit relativ wenigen Bauelementen aus und ist im Zusammenhang mit Schnellwechseleinrichtungen im Gehäuse verwendbar. Das Wechselfilterelement ist durch den stirnseitig angeordneten Dichtungsdeckel bei geringem Materialaufwand stabiler und damit leichter handhabbar, wobei der Dichtungsdeckel einen zusätzlichen Schutz ergibt.

Durch die in den Unteransprüchen aufgeführten Maßnahmen sind vorteilhafte Weiterbildungen und Verbesserungen des im Anspruch 1 angegebenen Wechselfilterelements möglich. Besonders günstig ist eine Ausbildung nach Anspruch 2, wobei alle Dichtungen als sichere Radialdichtungen arbeiten, die von axialen Vorspannungen, von Temperatur- und Schwingungseinflüssen unabhängig sind und zudem eine einfache Bauweise der Einstecklösung begünstigen. Durch eine Ausbildung nach Anspruch 3 baut das Wechselfilterelement besonders umweltfreundlich, sortenarm und billig. Zweckmäßig ist ferner eine Ausbildung nach Anspruch4, wodurch eine kompakte und einfache Bauweise begünstigt wird, bei der ein guter Zufluß zu den einzelnen Taschen im Filterwickel möglich ist. Vorteilhaft ist ferner eine Ausbildung nach Anspruch 5, was eine sichere, einfache und stabile Bauweise begünstigt und seine Montage erleichtert. Zweckmäßig ist ferner, wenn das Wechselfilterelement gemäß Anspruch 7 ausgebildet wird, so daß es neben ausreichender Stabilität eine ausreichende Flexibilität besitzt, um eine gute Funktion der Radialdichtungen zu gewährleisten. Auch wird durch die Flexibilität des Wechselfilterelements dessen Handhabung, insbesondere bei der Montage, erleichtert. Für eine sichere und stabile Halterung des Wechselfilterelements im Gehäuse ist es günstig, wenn es nach Anspruch 8 ausgebildet wird. Äußerst vorteilhat ist eine Ausbildung des Filtergehäuses zur Aufnahme des Wechselfilterelements nach Anspruch 9, wodurch ein einfaches und kostengünstiges Gehäuseteil erzielbar ist, in dem alle notwendigen Funktionselemente vereint sind. Weitere vorteilhafte Ausgestaltungen ergeben sich aus den Ansprüchen 10 bis 13, wodurch eine vielseitige Einsatzfähigkeit des Filterkopfes begünstigt wird. Ferner ist es zweckmäßig, den Filter nach Anspruch 14 auszubilden, wodurch sich zusätzliche Funktionen, wie zum Beispiel Heizung, kostengünstig integrieren lassen. Weitere vorteilhafte Ausgestaltungen ergeben sich aus den übrigen Ansprüchen, der Zeichnung und der Beschreibung.

### Zeichnung

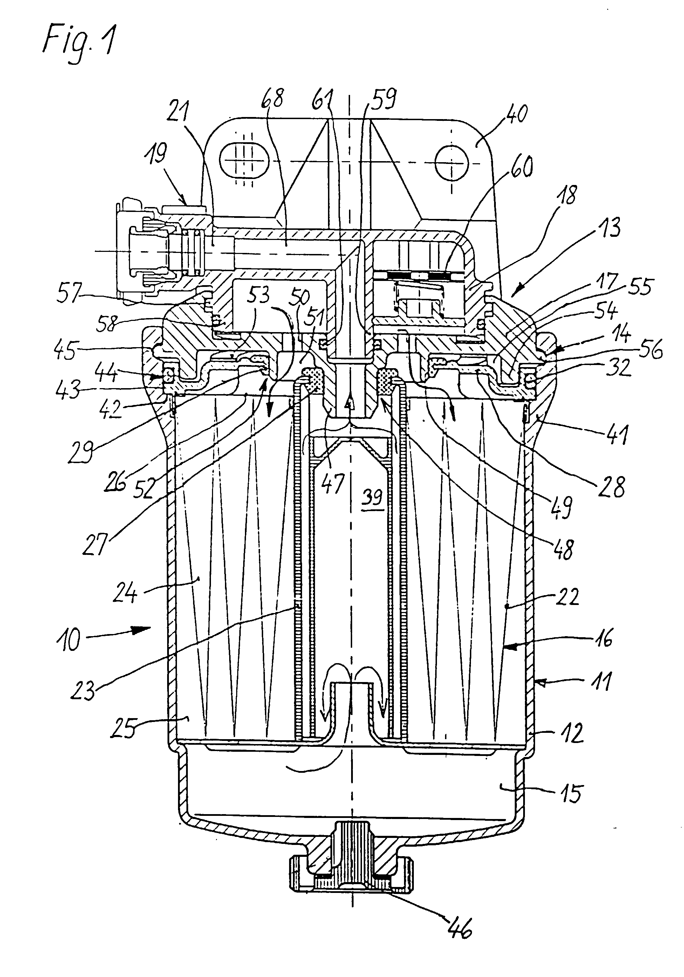

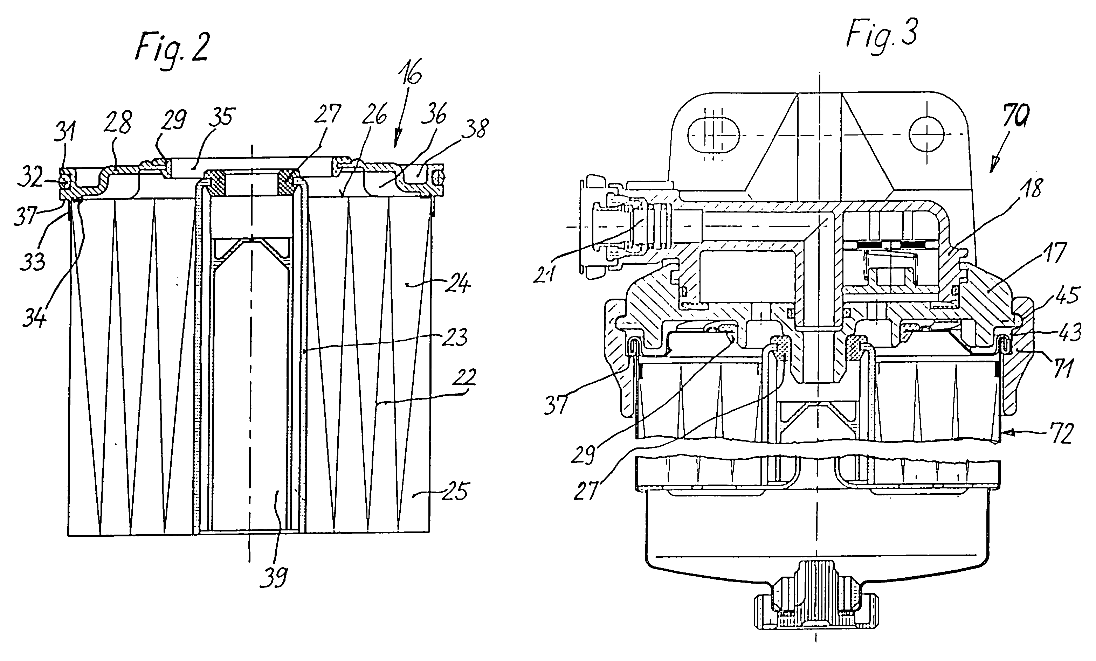

Ein Ausführungsbeispiel der Erfindung ist in der Zeichnung dargestellt und in der nachfolgenden Beschreibung näher erläutert. Es zeigen Figur 1 einen Längsschnitt durch ein erstes Filter zum Reinigen von Kraftstoff in einer Bauweise als Gehäusefilter, das in seinem Inneren ein austauschbares Wechselfilterelement aufnimmt, Figur 2 einen Längsschnitt durch das Wechselfilterelement nach Figur 1 und Figur 3 einen teilweisen Längsschnitt durch ein zweites Filter in einer Ausführung mit einer angebauten Wechselbox.

### Beschreibung der Ausführungsbeispiele

Die Figur 1 zeigt in vereinfachter Darstellung einen Längsschnitt durch ein Filter 10, wie es zum Reinigen von Dieselkraftstoff verwendet wird. Das Filter 10 hat ein Gehäuse 11, das im wesentlichen aus einem becherförmigen Gehäuseteil 12 und einem zugehörigen Filterkopf 13 besteht. Beide Gehäuseteile 12, 13 sind durch eine Schnellwechselverbindung 14 lösbar miteinander verbunden und begrenzen einen Innenraum 15, in dem ein austauschbares Wechselfilterelement 16 angeordnet ist. Der Filterkopf 13 selbst besteht im wesentlichen aus einem Halteflansch 17 und einem darin befestigten Anschlußteil 18, an dem die Anschlüsse für Zulauf 19 und Ablauf 21 ausgebildet sind. Das Filter 10 ist somit nach Art eines Gehäusefilters ausgebildet, bei dem nach dem Abnehmen des Gehäuseteils 12 vom Filterkopf 13 lediglich das verschmutzte Wechselfilterelement 16 ausgetauscht wird. Die besondere Bauart dieses Wechselfilterelements 16 wird im nachfolgenden näher beschrieben.

Die Figur 2 zeigt einen Längsschnitt durch das Wechselfilterelement 16 nach Figur 1, das einen axial durchströmten Wickel 22 aufweist. Bei diesem Wickel 22 sind in an sich bekannter Weise Filtermaterialbahnen unter Beifügung von Trennmittel, insbesondere Klebstoff, spiralförmig um ein Mittelrohr 23 gewickelt, so daß eine Schmutzseite 24 von einer Reinseite 25 getrennt wird. Auf der der Schmutzseite 24 zugeordneten Stirnseite 26 des Wickels 22 trägt das Mittelrohr 23 an seinem Ende einen inneren Dichtring 27, der als radial wirkender Formdichtring ausgeführt ist. Dieser innere Dichtring 27 dient im montierten Zustand des Wechselfilterelements 16 ebenfalls zur Trennung von Schmutzseite 24 und Reinseite 25 voneinander.

An der Stirnseite 26 des Wickels 22 ist ferner ein ringförmiger Dichtungsdeckel 28 aus Kunststoff angebaut, der an seinem inneren Rand einen mittleren Dichtring 29 aufweist, der konzentrisch zum inneren Dichtring 27 verläuft und ebenfalls als radial wirkender, kreisförmiger Formdichtring ausgebildet ist. Dieser mittlere Dichtring 29 dient in montiertem Zustand des Wechselfilterelements 16 zum Abdichten der Schmutzseite 24 nach außen hin. Der im wesentlichen als ebene Scheibe ausgeführte Dichtungsdeckel 28 weist einen äußeren Rand 31 mit Ringnut auf, in dem ein äußerer Dichtring 32 angeordnet ist. Der äußere Dichtring 32 wirkt ebenfalls als Radialdichtung und ist hier als einfacher O-Ring ausgeführt, welcher zur Abdichtung des Innenraums 15 nach außen hin dient. Am Dichtungsdeckel 28 ist im Bereich des äußeren Randes 31 ein ringförmig verlaufender, kurzer axialer Steg 33 angeformt, welcher den Wickel 22 an seinem Außenumfang umgreift. Ferner ist am äußeren Rand 31 im Bereich innerhalb des Steges 33 eine Schweißstelle 34 ausgebildet, in welcher der Wickel 22 mit mindestens einer seiner äußersten Windungen dicht und fest mit dem Dichtungsdeckel 28 verbunden ist, was in vorteilhafter Weise mittels Heizelementschweißung möglich ist. Zu diesem Zweck wird der Dichtungsdeckel 28, der aus einem geeigneten Kunststoff besteht, im Bereich der Schweißstelle 34 durch ein Heizelement so stark aufgeweicht, daß der Wickel 22 mit seinen äußeren Windungen in den aufgeweichten Kunststoff eingepreßt werden kann, der beim Erkalten erstarrt und eine dichte und feste Verbindung herstellt. Auf diese Weise ist die Schmutzseite 24 im Wickel 22 abgedichtet, so daß sie nur mit einer ringförmigen Einlauföffnung 35 in Verbindung steht, welche von dem inneren (27) und dem mittleren Dichtring (29) begrenzt wird. An dem Dichtungsdeckel 28 sind auf der der Stirnseite 26 zugeordneten Seite von der Einlauföffnung 35 ausgehende, radial verlaufende Einlaufkanäle 36 ausgebildet, so daß die zuströmende Flüssigkeit ungehindert auch in die äußeren Taschen des Wickels 22 fließen kann. Ferner weist der Dichtungsdeckel 28 an seinem äußeren Rand 31 auf seiner dem Steg 33 zugewandten Seite eine Schulter 37 auf, so daß das Wechselfilterelement 16 in einem Gehäuse axial festlegbar ist. Ferner verläuft in dem Dichtungsdeckel 28 angrenzend an den äußeren Rand 31 eine Ringnut 38, welche zum Zwecke der Verdrehsicherung und der Zentrierung nutzbar ist. Weiterhin ist im Inneren des Mittelrohrs 23 eine Gassammelglocke 39 eingesetzt.

Am Wechselfilterelement 16 dient der Dichtungsdeckel 28 auch als Versteifungselement, um dem Bauelement eine für die Handhabung und Montage ausreichende Festigkeit zu verleihen. Im Wechselfilterelement 16 sind das Mittelrohr 23 und der Dichtungsdeckel 28 somit nur über den nachgiebigen Wickel 22 mechanisch fest miteinander verbunden, so daß im montierten Zustand alle radial wirkenden Dichtringe 27, 29, 32 für eine einwandfreie und sichere Abdichtung sorgen. Das Wechselfilterelement baut kompakt, relativ einfach und mit geringem Materialaufwand, so daß es eine umweltfreundliche Bauweise ermöglicht, die sortenarm und ohne jegliche Metallteile baut. Durch die sicheren Radialdichtungen ist das Wechselfilterelement 16 im eingebautem Zustand unabhängig von axialen Vorspannungen und damit auch unbeeinflußt von Temperatur- und Schwingungsbelastungen. Zudem läßt sich das Wechselfilterelement 16 auch kostengünstig herstellen.

Wie die Figur 1 ferner zeigt, ist das Wechselfilterelement 16 austauschbar in dem Gehäuse 11 eingebaut, wozu das becherförmige Gehäuseteil 12 eine entsprechende Form aufweist. Das Gehäuseteil 12 ist zu diesem Zweck vorteilhaft aus Kunststoff hergestellt und weist an seinem offenen Ende eine verdickte Randzone 41 auf, in welcher angrenzend an einen ringförmigen Absatz 42 eine zylindrische Dichtfläche 43 ausgebildet ist. Das in das Gehäuseteil 12 eingesetzte Wechselfilterelement 16 sitzt mit seiner Schulter 37 auf diesem Absatz 42 auf, wodurch es in axialer Richtung festgelegt ist. Der O-Ring 32 dichtet radial an der Dichtfläche 43 ab, wodurch eine äußere Dichtstelle 44 gebildet ist, welche den Innenraum 15 bzw. die Reinseite 25 nach außen hin abdichtet. Ferner sind in der verdickten Randzone 41 auf deren Innenseite, und zwar angrenzend an die Dichtfläche 42 zum offenen Ende hin Schrägnutmittel 45 ausgebildet, welche als Bauelemente für die Schnellwechselverbindung 14 dienen. In dem aus Kunststoff bestehenden Gehäuseteil 12 kann eine Wasserablaßschraube 46 unmittelbar eingebaut werden.

Im Filterkopf 13 dient der relativ einfach und kompakt bauende Halteflansch 17 zur Aufnahme und Weiterleitung von mechanischen Kräften und ist deswegen als Metallteil ausgebildet, das insbesondere aus Aluminium besteht. Am Halteflansch 17 ist seitlich ein Lochflansch 40 angeformt, mit dem das Filter 19 an einem nicht näher gezeichneten Maschinenteil befestigbar ist. Der Halteflansch 17 weist ferner einen in den Innenraum 15 hineinragenden, zentral angeordneten ersten Rohrstutzen 47 auf, der über einen winkelförmig verlaufenden Kanal 68 im Anschlußteil 18 dort mit dem Ablaufanschluß 21 Verbindung hat. Auf den ersten Rohrstutzen 47 ist der innere Dichtring 27 des Wechselfilterelements 16 aufgesteckt, so daß die Reinseite 25 von der Schmutzseite 24 durch eine innere Dichtstelle 48 getrennt ist. Konzentrisch zu dem axial verlaufenden, ersten Rohrstutzen 47 ist am Halteflansch 17 ein zweiter, rohrförmiger Stutzen 49 mit größerem Durchmesser angeformt, dessen axiale Länge etwa halb so groß ist wie diejenige des ersten Rohrstutzens 47. Ein zwischen den beiden Rohrstutzen 47, 49 ausgebildeter Ringraum 51 steht über Öffnungen 50 im Halteflansch 17 mit dem Zulaufanschluß 19 im Anschlußteil 18 in Verbindung. Auf den Außendurchmesser des rohrförmigen Stutzens 49 ist der mittlere Dichtring 29 des Wechselfilterelements 16 aufgeschoben und bildet damit eine mittlere Dichtstelle 52, welche die Schmutzseite 24 im Filter 10 nach außen hin abdichtet. Der Ringraum 51 in dem Halteflansch 17 steht über die Einlauföffnung 35 im Wechselfilterelement 16 mit dessen Schmutzseite 24 in Verbindung. Zwischen dem Dichtungsdeckel 28 und dem Halteflansch 17 ist im Bereich zwischen der mittleren Dichtstelle 52 und der äußeren Dichtstelle 44 ein ringförmiges Federelement 53 angeordnet, welches die beiden Teile auseinanderdrückt. Ferner ist am Halteflansch 17 koaxial zu den Rohrstutzen 47 und 49 nahe dessem äußeren Rand ein Ringwulst 54 ausgebildet, der zentrierend in die Ringnut 38 des Dichtungsdeckels 38 greift und zugleich als Verdrehsicherung 55 ausgebildet ist.

An dem Außenumfang des Halteflansches 17 sind Rampenmittel 56 angeordnet, welche als Bauelemente der Schnellwechselverbindung 14 dienen und in die zugehörigen Schrägnutmittel 45 des becherförmigen Gehäuseteils 12 greifen. Die Schnellwechselverbindung 14 kann in an sich bekannter Weise als ein- oder mehrgängiges Trapezgewinde ausgebildet werden, oder die eingangs erörterte Bauweise aufweisen oder eine andere Ausführungsart bekannter Schnellwechselverbindungen aufweisen, wie sie auch unter dem Namen "twist and lock" bekannt sind.

Im Halteflansch 17 ist auf dessen dem Wechselfilterelement 16 gegenüberliegenden Seite das Anschlußteil 18 angebaut, das vorzugsweise aus Kunststoff besteht und in seinem Inneren eine Heizeinrichtung 60 aufnimmt. Das Anschlußteil 18 ist mit Hilfe eines Bajonettverschlusses 57 lösbar im Halteflansch 17 befestigt und im Bereich seiner Außenwand 58 und seines Zentralstutzens 59 jeweils durch eine Radialdichtung 61 abgedichtet.

Die Wirkungsweise des Filters 10 kann im wesentlichen als an sich bekannt vorausgesetzt werden. Da der Wickel 22 im Wechselfilterelement 16 axial von oben nach unten durchströmt wird, können sich Schmutzpartikel infolge dieser gewählten Bauweise nur im Raum zwischen dem Dichtungsdeckel 28 und dem Wickel 22 oder in den Taschen des Wickels 22 selbst ansammeln. Dieser Schmutz wird somit beim Herausnehmen des Wechselfilterelements 16 mitentsorgt. Die gesamte innere Wand des becherförmigen Gehäuseteils 12 befindet sich auf der Reinseite des Filters 10, so daß beim Einbau eines neuen, sauberen Wechselfilterelements 16 kein Schmutz ungewollt auf die Reinseite des Filters gelangen kann, was zu Störungen im Einspritzsystem führen könnte. Das Wechselfilterelement 16 erhält durch den versteifenden Dichtungsdeckel 28 einerseits ausreichende Stabilität für seine Handhabung, insbesondere bei der Montage und ermöglicht andererseits sichere radiale Abichtungen. Die Schnellwechselverbindung 14 erlaubt dabei einen servicefreundlichen Austausch des Wechselfilterelements 16.

Die Figur 3 zeigt einen teilweisen Längsschnitt durch ein zweites Filter 70, das sich von dem Filter 10 nach Figur 1 vor allem dadurch unterscheidet, daß an dem gleichen Filterkopf 13 mit Hilfe einer Überwurfmutter 71 eine wegwerfbare Wechselbox 72 angebaut wird. Die Überwurfmutter 71 weist dabei die gleiche Konfiguration wie die verdickte Randzone 41 des Gehäuseteils 12 auf, nämlich die Schrägnutmittel 45, die zylindrische Dichtfläche 43 sowie den Absatz 42. Auch die Wechselbox 72 weist an ihrer Anbauseite die gleiche Konfiguration wie das Wechselfilterelement 16 auf, nämlich den inneren Dichtring 27, den mittleren Dichtring 29 sowie die Schulter 37, welche hier vom Bördelrand der Wechselbox 72 gebildet wird. Es kann somit der unveränderte Filterkopf 13 auch im Zusammenhang mit einer Wechselbox eingesetzt werden, wobei die Überwurfmutter 71 mit der Schnellwechselverbindung 14 für einen servicefreundlichen Austausch sorgt.

Selbstverständlich sind an den gezeigten Ausführungsformen Änderungen möglich, ohne vom Gedanken der Erfindung abzuweichen. Obwohl die gezeigte Ausführungsform des Wechselfilterelements 16 besonders vorteilhaft ist, kann es bei einem sehr weichen Filtermaterial bzw. Wickel zur Erhöhung der Stabilität des Wechselfilterelements zweckmäßig sein, zwischen dem Mittelrohr 23 und dem Dichtungsdeckel 28 stabilisierende Arme vorzusehen, welche den Durchfluß durch die Einlauföffnung 35 nicht stören. Dabei können diese Arme so flexibel ausgebildet werden, daß die Funktion der Radialdichtungen bei dieser Einstecklösung des Wechselfilterelements 16 nicht beeinträchtigt werden. Auch ist es ohne weiteres möglich, auf der Außenseite des Dichtungsdeckels 28 einen etwa halbrundförmigen Haltebügel anzuordnen, um ein Herausnehmen des Wechselfilterelements aus dem Gehäuseteil 12 zu erleichtern.

## Patentansprüche

1. Wechselfilterelement zum Reinigen von Kraftstoff, insbesondere Dieselkraftstoff, und geeignet zum austauschbaren Einbau in das Gehäuse eines Filters, wobei das Wechselfilterelement einen axial durchströmten Wickel aufweist, bei dem die Filtermaterialbahnen spiralförmig um ein Mittelrohr gewickelt sind, das in einer Stirnseite des Wechselfilterelements einen Dichtring für eine innere Dichtstelle trägt, welche der Trennung von Schmutz- und Reinseite bei montiertem Zustand im Filtergehäuse zugeordnet ist, und mit einem dem Wickel zugeordneten Versteifungselement, das mit einem äußeren Rand des Wickels dicht und fest verbunden ist und mit einer äußeren Dichtstelle zur Abdichtung nach Außen hin, dadurch gekennzeichnet, daß das Wechselfilterelement (16) als Versteifungselement einen auf dieser Stirnseite (26) angeordneten, im wesentlichen ringförmigen Dichtungsdeckel (28) aufweist, der mit seinem Außenrand (31) mit dem äußeren Rand des Wickels (22) dicht und fest verbunden ist und dort einen der äußeren Dichtstelle (44) zugeordneten , die Reinseite (25) nach außen abdichtenden äußeren Dichtring (32) trägt, während der Dichtungsdeckel (28) an seinem inneren Rand einen die Schmutzseite (24) nach Außen abdichtenden mittleren Dichtring (29) trägt, der zusammen mit dem im Durchmesser kleineren, inneren Dichtring (27) am Mittelrohr (23) eine Einlauföffnung (35) bildet.

2. Wechselfilterelement nach Anspruch 1, dadurch gekennzeichnet, daß der äußere, der mittlere und der innere Dichtring (32, 29, 27) als radial wirkende Dichtringe ausgebildet sind, wobei insbesondere der äußere Dichtring ein O-Ring (32) und die beiden anderen Dichtringe Formdichtringe (29, 27) sind.

3. Wechselfilterelement nach Anspruch 1 oder 2, dadurch gekennzeichnet, daß der Dichtungsdeckel (28) aus Kunststoff besteht und im Bereich seines Außenrandes (31) mit dem äußeren Rand des Wickels (22) dicht und fest durch eine Schweißstelle (34) verbunden ist.

4. Wechselfilterelement nach einem der Ansprüche 1 bis 3, dadurch gekennzeichnet, daß der Dichtungsdeckel (28) mit seinen beiden Dichtringen (29, 32) sowie der innere Dichtring (27) am Mittelrohr (23) im wesentlichen in einer radialen Ebene liegen und daß im Dichtungsdeckel (28) von der Einlauföffnung (35) ausgehende Einlaufkanäle (36) bis zu den außenliegenden Windungen des Wickels (22) führen.

5. Wechselfilterelement nach Anspruch 3, dadurch gekennzeichnet, daß der Dichtungdeckel (28) an seinem Außenrand (31) auf der dem Wickel (22) zugewandten Seite einen ringförmigen, axial verlaufenden Steg (33) aufweist, der den Wickel (22) und die Schweißstelle (34) umringt.

6. Wechselfilterelement nach einem der Ansprüche 1 bis 5, dadurch gekennzeichnet, daß der Dichtungsdeckel (28) nahe seinem Außenrand (31) eine zentrierende Einformung (38), insbesondere eine Ringnut (38) aufweist.

7. Wechselfilterelement nach einem oder mehreren der Ansprüche 1 bis 6, dadurch gekennzeichnet, daß das Mittelrohr (23) und der Dichtungsdeckel (28) nur über den Wickel (22) miteinander mechanisch verbunden sind.

8. Wechselfilterelement nach einem der Ansprüche 1 bis 7, dadurch gekennzeichnet, daß an dem Außenrand (31) eine das Wechselfilterelement (16) in einem Gehäuse (11) haltende Schulter (37) angeordnet ist.

9. Filter mit einem Gehäuse zum Einbau des Wechselfilterelements nach Anspruch 1, wobei das Gehäuse einen die Anschlüsse für Zulauf und Ablauf aufweisenden Filterkopf und ein daran befestigbares, becherförmiges Gehäuseteil aufweist, der das Wechselfilterelement aufnimmt und bei dem der Filterkopf mindestens zwei konzentrisch zueinander liegende Dichtstellen hat, von denen die Dichtstelle an einem zentralen Rohrstutzen dem inneren Dichtring des Wechselfiterelements zur Trennung von Schmutz- und Reinseite zugeordnet ist, während die Dichtstelle an einem rohrförmigen Stutzen am Filterkopf der mittleren Dichtstelle zugeordnet ist, dadurch gekennzeichnet, daß das becherförmige Gehäuseteil (12) aus Kunststoff besteht und an seinem offenen Ende eine verdickte Randzone (41) aufweist, auf deren Innenseite die Bauelemente (45) für eine Schnellwechselverbindung (14) zwischen beiden Gehäuseteilen (12, 13), eine zylindrische Dichtfläche (43) für den äußeren Dichtring (32) des Wechselfilterelements (16) sowie ein der Schulter (37) zugeordneter Absatz (42) zur axialen Halterung des Wechselfilterelements (16) angeordnet sind.

10. Filter nach Anspruch 9, dadurch gekennzeichnet, daß in der Randzone (41) des Gehäuseteils (12) die zylindrische Dichtfläche (43) zwischen den Bauelementen der Schnellwechselverbindung (14) einerseits und der Schulter (37) andererseits angeordnet ist.

11. Filter nach Anspruch 9 oder 10, dadurch gekennzeichnet, daß das Wechselfilterelement (16) mit seinen drei radial wirkenden Dichtringen (27, 29, 32) in axialer Richtung in das Gehäuse (11) einsteckbar ist, wobei auf dem rohrförmigen Stutzen (49) der mittlere Dichtring (29) angeordnet ist.

12. Filter nach einem der Ansprüche 9 bis 11, dadurch gekennzeichnet, daß der Filterkopf (13) an seinem Außenumfang angeordnete, zugehörige Bauelemente (56) der Schnellwechselverbindung (14) aufweist.

13. Filter nach Anspruch 12, dadurch gekennzeichnet, daß der Filterkopf (13) auf seiner dem Wechselfilterelement (16) zugewandten Seite einen zentrierenden Ringwulst (54) aufweist, der in die zugeordnete Ringnut (38) am Dichtungdeckel (28) ragt und daß insbesondere daran eine Verdrehsicherung (55) ausgebildet ist.

14. Filter nach einem der Ansprüche 9 bis 13, dadurch gekennzeichnet, daß der Filterkopf (13) einen vorzugsweise metallischen Halteflansch (17) mit rampenartigen Bauelementen (56) für die Schnellwechselverbindung (14) an dessen Außenumfang sowie ein im Halteflansch (17) austauschbar befestigtes Anschlußteil (18) mit den Anschlüssen für Zulauf (19) und Ablauf (21) aufweist, wobei der zentrische Rohrstutzen (47) mit dem Ablauf (21) und der Zulauf (19) über Öffnungen (50) im Halteflansch (17) mit der Schmutzseite (24) des Wechselfilterelements (16) Verbindung haben.

15. Filter nach einem der Ansprüche 9 bis 14, dadurch gekennzeichnet, daß das axial durchströmte Filterelement (16) in seinem Mittelrohr (23) eine Gassammelglocke (39) aufnimmt, deren Entlüftungsöffnung mit dem zentralen Rohrstutzen (47) des Filterkopfes (13) zusammenarbeitet.

16. Filter nach Anspruch 14, dadurch gekennzeichnet, daß das Anschlußteil (18) mittels Bajonettverschluß (57) lösbar im Halteflansch (17) befestigt ist und an seiner Außenwand (58) und an seinem Zentralstutzen (59) jeweils durch Radialdichtungen (61) abgedichtet ist.

## Claims

1. Replaceable filter element for the cleaning of fuel, in particular diesel fuel, and suitable for exchangeable installation in the casing of a filter, the replaceable filter element having a winding, through which the flow passes axially and in which the filter material webs are wound spirally around a middle tube which, in one end face of the replaceable filter element, carries a sealing ring for an inner sealing point which is assigned to separating the dirty side and clean side when mounted in the filter casing, with a reinforcing element which is assigned to the winding and which is sealingly and fixedly connected to an outer edge of the winding, and with an outer sealing point for sealing off relative to the outside, characterized in that the replaceable filter element (16) has as a reinforcing element an essentially annular sealing cover (28) which is arranged on this end face (26) and which is sealingly and fixedly connected at its outer edge (31) to the outer edge of the winding (22) and carries there an outer sealing ring (32) assigned to the outer sealing point (44) and sealing off the clean side (25) relative to the outside, whilst the sealing cover (28) carries, at its inner edge, a middle sealing ring (29) which seals off the dirty side (24) relative to the outside and which, together with the inner sealing ring (27) of smaller diameter on the middle tube (23), forms an inflow orifice (35).

2. Replaceable filter element according to Claim 1, characterized in that the outer, the middle and the inner sealing rings (32, 29, 27) are designed as radially acting sealing rings, in particular the outer sealing ring being an O-ring (32) and the other two sealing rings being shaped sealing rings (29, 27).

3. Replaceable filter element according to Claim 1 or 2, characterized in that the sealing cover (28) consists of plastic and is sealingly and fixedly connected, in the region of its outer side (31), to the outer edge of the winding (22) by means of a weld (34).

4. Replaceable filter element according to one of Claims 1 to 3, characterized in that the sealing cover (28), together with its two sealing rings (29, 32), and the inner sealing ring (27) on the middle tube (23) lie essentially in one radial plane, and in that, in the sealing cover (28), inflow ducts (36) starting from the inflow orifice (35) lead as far as the outer turns of the winding (22).

5. Replaceable filter element according to Claim 3, characterized in that the sealing cover (28) has at its outer edge (31), on the side facing the winding (22), an annular web (33) which runs axially and which encircles the winding (22) and the weld (34).

6. Replaceable filter element according to one of Claims 1 to 5, characterized in that the sealing cover (28) has, near its outer edge (31), a centring shaped-in portion (38), in particular an annular groove (38).

7. Replaceable filter element according to one or more of Claims 1 to 6, characterized in that the middle tube (23) and the sealing cover (28) are mechanically connected to one another solely via the winding (22).

8. Replaceable filter element according to one of Claims 1 to 7, characterized in that a shoulder (37) holding the replaceable filter element (16) in a casing (11) is arranged at the outer edge (31).

9. Filter with a casing for the installation of the replaceable filter element according to Claim 1, the housing having a filter head, with the connections for inflow and outflow, and having a bowl-shaped housing part which is capable of being fastened thereto and receives the replaceable filter element, and in which the filter head has at least two sealing points which are located concentrically relative to one another and of which the sealing point on a central tubular connection piece is assigned to the inner sealing ring of the replaceable filter element for the separation of the dirty side and clean side, whilst the sealing point on a tubular connection piece on the filter head is assigned to the middle sealing ring, characterized in that the bowl-shaped housing part (12) consists of plastic and has, at its open end, a thickened edge zone (41), on the inside of which are arranged the structural elements (45) for a quick-change connection (14) between two housing parts (12,13), a cylindrical sealing face (43) for the outer sealing ring (32) of the replaceable filter element (16) and a step (42), assigned to the shoulder (37), for the axial retention of the replaceable filter element (16).

10. Filter according to Claim 9, characterized in that, in the edge zone (41) of the housing part (12), the cylindrical sealing face (43) is arranged between the structural elements of the quick-change connection (14), on the one hand, and the shoulder (37), on the other hand.

11. Filter according to Claim 9 or 10, characterized in that the replaceable filter element (16), together with its three radially acting sealing rings (27, 29, 32), can be inserted into the casing (11) in the axial direction, the middle sealing ring (29) being arranged on the tubular connection piece (49).

12. Filter according to one of Claims 9 to 11, characterized in that the filter head (13) has associated structural elements (56) of the quick-change connection (14) which are arranged on its outer circumference.

13. Filter according to Claim 12, characterized in that the filter head (13) has, on its side facing the replaceable filter element (16), a centring annular bead (54) which projects into the associated annular groove (38) on the sealing cover (28), and in that, in particular, a safeguard (55) against relative rotation is formed thereon.

14. Filter according to one of Claims 9 to 13, characterized in that the filter head (13) has a preferably metallic holding flange (17) with ramp-like structural elements (56) for the quick-change connection (14) on its outer circumference as well as a connecting part (18) fastened exchangeably in the holding flange (17) and possessing the connections for inflow (19) and outflow (21), the central tubular connection piece (47) being connected to the outflow (21), and the inflow (19) being connected via orifices (50) in the holding flange (17) to the dirty side (24) of the replaceable filter element (16).

15. Filter according to one of Claims 9 to 14, characterized in that the filter element (16), through which the flow passes axially, receives, in its middle tube (23), a gas-collecting bell (39), the vent orifice of which cooperates with the central tubular connection piece (47) of the filter head (13).

16. Filter according to Claim 14, characterized in that the connecting part (18) is releasably fastened in the holding flange (17) by means of a bayonet fastening (57), the said connecting part (18) being sealed off on its outer wall (58) and on its central connection piece (59) in each case by means of radial gaskets (61).

## Revendications

1. Elément de filtre interchangeable servant à purifier du carburant, en particulier du carburant pour moteur Diesel, et approprié pour le montage interchangeable dans le boîtier d'un filtre, l'élément de filtre interchangeable présentant un enroulement parcouru axialement par l'écoulement du carburant, dans lequel les bandes de matière filtrante sont enroulées en forme de spirale autour d'un tube central qui porte, dans une face frontale de l'élément de filtre interchangeable, une bague d'étanchéité pour une zone intérieure d'étanchéité, bague qui est associée à la séparation du côté sale et du côté propre en position montée dans le boîtier de filtre, avec un élément de raidissement associé à l'enroulement et relié de façon étanche et solidaire à un bord extérieur de l'enroulement, et avec une zone d'étanchéité servant à assurer l'étanchéité vers l'extérieur,
caractérisé en ce que
l'élément de filtre interchangeable(16) présente, en tant qu'élément de raidissement, un couvercle d'étanchéité (28) de forme sensiblement annulaire disposé sur la face frontale (26), couvercle d'étanchéité (28) qui est relié de façon étanche et solidaire, par son bord extérieur (31), au bord extérieur de l'enroulement (22) et porte à cet endroit une bague d'étanchéité extérieure (32) associée à la zone extérieure d'étanchéité (44), assurant l'étanchéité du côté propre (25) vers l'extérieur, tandis que le couvercle d'étanchéité (28) porte sur son bord intérieur une bague d'étanchéité centrale (29) qui assure l'étanchéité du côté sale (24) vers l'extérieur, bague d'étanchéité centrale (29) qui forme, avec la bague d'étanchéité intérieure (27) de diamètre plus petit, un orifice d'entrée (35) sur le tube central (23).

2. Elément de filtre interchangeable selon la revendication 1,
caractérisé en ce que
la bague d'étanchéité extérieure, la bague d'étanchéité centrale et la bague d'étanchéité intérieure (32, 29, 27) sont constituées sous la forme de bagues d'étanchéité fonctionnant radialement, en particulier la bague d'étanchéité extérieure étant un joint torique (32) et les deux autres bagues d'étanchéité étant des bagues d'étanchéité profilées (29, 27).

3. Elément de filtre interchangeable selon la revendication 1 ou 2,
caractérisé en ce que
le couvercle d'étanchéité (28) est réalisé en matière plastique et est relié de façon étanche et solidaire au bord extérieur de l'enroulement (22) par une zone de soudage (34) dans la zone de son bord extérieur (31).

4. Elément de filtre interchangeable selon l'une des revendications 1 à 3,
caractérisé en ce que
- le couvercle d'étanchéité (28) muni de ses deux bagues d'étanchéité (29, 32) et la bague d'étanchéité intérieure (27) sur le tube central (23), se trouvent sensiblement dans un plan radial, et
- des canaux d'entrée (36) provenant de l'orifice d'entrée (35) conduisent, dans le couvercle d'étanchéité (28), jusqu'aux spires de l'enroulement (22) qui se trouvent à l'extérieur.

5. Elément de filtre interchangeable selon la revendication 3,
caractérisé en ce que
le couvercle d'étanchéité (28) présente sur son bord extérieur (31), du côté tourné vers l'enroulement (22), une nervure (33) de forme annulaire qui s'étend axialement et qui entoure l'enroulement (22) et la zone de soudage (34).

6. Elément de filtre interchangeable selon l'une des revendications 1 à 5,
caractérisé en ce que
le couvercle d'étanchéité (28) présente à proximité de son bord extérieur (31) une entrée de centrage (38), en particulier une rainure annulaire (38).

7. Elément de filtre interchangeable selon l'une ou plusieurs des revendications 1 à 6,
caractérisé en ce que
le tube central (23) et le couvercle d'étanchéité (28) ne sont reliés mécaniquement l'un à l'autre que par l'enroulement (22).

8. Elément de filtre interchangeable selon l'une des revendications 1 à 7,
caractérisé en ce que
sur le bord extérieur (31) on dispose un épaulement (37) qui maintient l'élément de filtre interchangeable (16) dans un boîtier (11).

9. Filtre avec un boîtier servant au montage de l'élément de filtre interchangeable selon la revendication 1,
le boîtier présentant une tête de filtre comportant les raccordements d'arrivée et de départ et une pièce de boîtier en forme de cuve que l'on peut fixer dessus, pièce qui reçoit l'élément de filtre interchangeable et dans laquelle la tête de filtre a au moins deux zones d'étanchéité concentriques l'une par rapport à l'autre, zones dont l'une, située sur un ajutage central tubulaire, est associée à la bague d'étanchéité intérieure de l'élément de filtre interchangeable pour séparer le côté propre du côté sale, tandis que l'autre, située sur un ajutage de forme tubulaire sur la tête de filtre, est associée à la zone d'étanchéité centrale,
caractérisé en ce que
la pièce de boîtier (12) en forme de cuve est réalisée en matière plastique et présente, à son extrémité ouverte une zone de bordure épaissie (41) sur le côté intérieur de laquelle sont disposés les éléments constitutifs (45) servant à une liaison à serrage rapide (14) entre les deux parties de boîtier (12, 13), une surface d'étanchéité cylindrique (43) pour la bague d'étanchéité extérieure (32) de l'élément de filtre interchangeable (16), et un appendice (42), associé à l'épaulement (37), servant à la fixation axiale de l'élément de filtre interchangeable (16).

10. Filtre selon la revendication 9,
caractérisé en ce que
dans la zone de bordure (41) de la pièce de boîtier(12), on dispose la surface d'étanchéité cylindrique (43) entre les éléments constitutifs de la liaison à serrage rapide (14) d'une part et l'épaulement (37) d'autre part.

11. Filtre selon la revendication 9 ou 10,
caractérisé en ce que
l'élément de filtre interchangeable (16) peut être enfilé, avec ses trois bagues d'étanchéité (27, 29, 32) qui opèrent radialement, dans le sens axial dans le boîtier (11), la bague d'étanchéité centrale (29) étant disposée sur l'ajutage de forme tubulaire (49)

12. Filtre selon l'une des revendications 9 à 11,
caractérisé en ce que
la tête de filtre (13) présente des éléments constitutifs (56) de la liaison à serrage rapide (14), correspondants, qui sont disposés sur son pourtour extérieur.

13. Filtre selon la revendication 12,
caractérisé en ce que
la tête de filtre (13) présente, sur son côté tourné vers l'élément de filtre interchangeable (16), un bourrelet annulaire (54) de centrage qui pénètre dans la rainure annulaire correspondante (38) sur le couvercle d'étanchéité (28), et l'on constitue en particulier dessus un blocage contre toute rotation (55).

14. Filtre selon l'une des revendications 9 à 13,
caractérisé en ce que
la tête de filtre (13) présente une bride de fixation (17), de préférence métallique, avec des éléments constitutifs en forme de rampes (56) pour la liaison à serrage rapide (14) sur son pourtour extérieur, et une pièce de raccordement (18), fixée de façon interchangeable dans la bride de fixation (17) avec les raccordements d'arrivée (19) et de départ (21), l'ajutage tubulaire central (47) avec la sortie (21) et l'entrée (19) étant en liaison, par l'intermédiaire d'orifices (50) dans la bride de fixation (17), avec le côté sale (24) de l'élément de filtre interchangeable (16).

15. Filtre selon l'une des revendications 9 à 14,
caractérisé en ce que
l'élément de filtre interchangeable (16) qui est parcouru axialement par l'écoulement du carburant, reçoit dans son tube central (23) une cloche (39) qui sert à collecter les gaz et dont l'orifice de purge coopère avec l'ajutage central tubulaire (47) de la tête de filtre (13).

16. Filtre selon la revendication 14,
caractérisé en ce que
la pièce de raccordement (18) est fixée de façon amovible au moyen d'un verrouillage à baïonnette (57) dans la bride de fixation (17), et est rendue étanche sur sa paroi extérieure (58) et sur son ajutage central (59) respectivement par des joints d'étanchéité radiaux (61).
